Europäisches Patentamt

European Patent Office

Office européen des brevets

(19)

(11) Publication number: **0 249 387**
**A1**

## (12) EUROPEAN PATENT APPLICATION

(21) Application number: **87304892.0**

(22) Date of filing: **03.06.87**

(51) Int. Cl.⁴: **G01F 1/32**

(30) Priority: **06.06.86 GB 8613851**

(43) Date of publication of application:
**16.12.87 Bulletin 87/51**

(84) Designated Contracting States:
**AT BE CH DE ES FR GB GR IT LI LU NL SE**

(71) Applicant: **NEPTUNE MEASUREMENT LIMITED**
**P.O. Box 2 Dobcross**
**Oldham Lancashire, OL3 5BD(GB)**

(72) Inventor: **Sersou, Brahim**
**National Nuclear Corporation Limited**
**Risley Warrington Cheshire WA3 6BZ(GB)**
Inventor: **Jennison, Michael Alexander Clifton**
**Oxford Instruments PLC**
**Osney Mead Oxford OX2 ODX(GB)**
Inventor: **Jones, Barry Edward Brunel Centre**
**for**
**Manufacturing Metrology Brunel University**
**Uxbridge Middlesex UB8 3PH(GB)**

(74) Representative: **Allman, Peter John et al**
**MARKS & CLERK Suite 301 Sunlight House**
**Quay Street**
**Manchester M3 3JY(GB)**

(54) Vortex shedding flowmeter.

(57) A vortex shedding flowmeter for measuring the rate of flow of a fluid, comprising a bluff body which in use is mounted in the flow to be measured, and an electrical component (8) such as a thermistor positioned so as to be exposed to vortices shed by the bluff body. The electrical component (8) has electrical characteristics which vary in response to the vortices, and is energised by an energizing circuit (13, 17) physically isolated from the flow and the electrical component (8). The energizing circuit (13, 17) is electro-magnetically coupled to the electrical component (8) so as to cause an energizing current to flow therein, the current being modulated by variations in the electrical characteristics. A detector (14) physically isolated from the flow detects the modulation of the current to obtain a measurement of the flow rate.

FIG. 3

## VORTEX SHEDDING FLOWMETER

The present invention relates to a vortex shedding flowmeter for measuring the rate of flow of a fluid through for example a pipe or other conduit.

Vortex shedding flowmeters are well known as described in for example Published British Patent Specification No. GB 2,160,313 and International Published Patent Specification No. WO 83/03667. Such flowmeters comprise a bluff body which is introduced into the flowing fluid so as to generate vortices therein. The frequency of vortex generation is monitored and from this frequency can be derived a measure of the flow rate.

It is necessary to provide a transducer which is sensitive to the vortices generated by the bluff body. Where the flow is through for example a steel pipe this means in practice that the sensor must be located within the pressure enclosure defined by the pipe. In many situations it is by no means easy to make direct connections to a transducer positioned within a pipe as problems can arise in insulating conductors extending through a wall of the pipe whilst at the same time maintaining an adequate seal. Such conductors are necessary to provide power to the transducer and to convey data therefrom. This has meant that vortex shedding flowmeters have not been thought suitable for many flow rate measuring applications.

It is an object of the present invention to obviate or mitigate the above problems.

According to the present invention there is provided a vortex shedding flowmeter for measuring the rate of flow of a fluid, comprising a bluff body which in use is mounted in the flow to be measured, an electrical component positioned so as to be exposed to vortices shed by the bluff body, the electrical component having electrical characteristics which vary in response to the vortices, an electrical circuit connected to the electrical component, an energizing circuit physically isolated from the flow and the electrical circuit, the energizing circuit being electro-magnetically coupled to the electrical component so as to cause an energizing current to flow therein which is modulated by variations in the said electrical characteristics, and means physically isolated from the flow for detecting the modulation of the said current to obtain a measurement of the flow rate.

In accordance with the present invention no electrical connections need to be made which penetrate the wall of the pipe or other conduit within which the flow rate of a fluid is to be measured. Thus problems associated with electrical insulation and leak prevention are automatically avoided.

Preferably the electrical component is a thermistor. Thermistors provide relatively high signal to noise ratios and are therefore suitable for use in accordance with the present invention. The thermistor is preferably energised by an AC carrier signal which causes it to heat up, its resistance then fluctuating in response to cyclic local fluid flows generated by vortices shed behind the bluff body. The resultant AC voltage across the thermistor is thus amplitude modulated with the thermistor acting as the modulating device. A tertiary coil can be mounted outside the pip or other conduit through which the fluid is flowing and a modulation voltage can be derived therefrom demodulated and smoothed to obtain the amplitude variation the frequency of which is proportional to the rate of vortex shedding.

An embodiment of the present invention will now be described, by way of example, with reference to the accompanying drawings, in which :-

Fig. 1 is a vertical section through a pipe housing a bluff body showing the positioning of various components of an embodiment of the present invention;

Fig. 2 is a section through the bluff body of Fig. 1, the section lines I-I of Fig. 2 indicating the view illustrated in Fig. 1; and

Fig. 3 is a schematic circuit diagram of the embodiment of the invention illustrated in Figs. 1 and 2.

Referring to the drawings, fluid flows in the direction of arrow 1 through a pipe 2 within which a bluff body 3 is supported. The bluff body comprises a substantially planar face 4 which is arranged perpendicular to the direction of flow and a tapering rear section 5. The bluff body sheds vortices in a known manner.

A bore 6 extends parallel to the face 4 and is in communication with the face 4 via a passageway 7. A thermistor 8 is positioned so as to be exposed to fluid driven through the bore 6. The bores 6 and 7 are local flow channels through which vortices are directed towards the thermistor 8 and accordingly if a constant energistation current is supplied to the thermistor its temperature and hence resistance vary at a frequency which is a function of the rate at which vortices are generated.

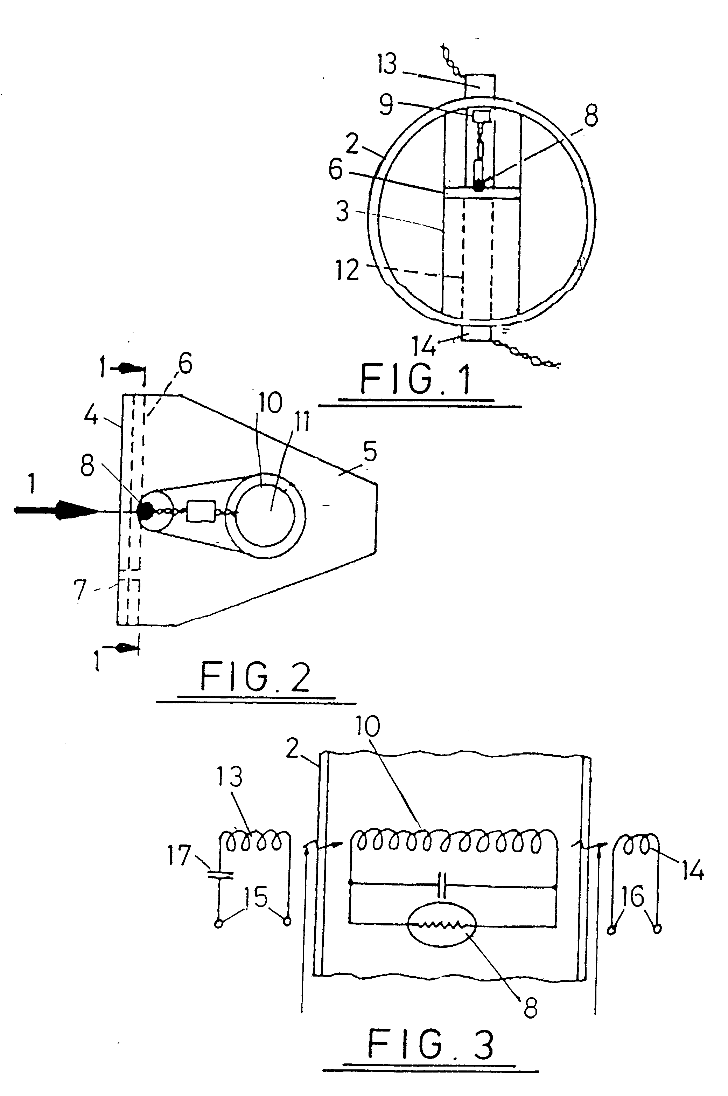

The thermistor 8 is connected in parallel with a capacitor 9 across a coil 10 wound on a ferrite core 11. The capacitor 9, coil 10 and core 11 are encapsulated in the bluff body 3, the coil and core extending throughout most of the length of the bluff body as indicated by dotted lines 12 in Fig. 1. Further coils 13 and 14 are located outside the pipe 2 at respective ends of the bluff body.

0 249 387

Referring now to Fig. 3, an AC input signal is applied to the terminals 15 of coil 13 and as a result of electromagnetic coupling between the coils 13 and 10 an energising current is delivered to the thermistor 8. Variations in the resistance of the thermistor result in the AC voltage thereacross being amplitude modulated. This modulated voltage is detected by the coil 14 which provides an output signal across terminals 16. This output signal is then demodulated and smoothed in accordance with conventional techniques to obtain the frequency of the amplitude modulation which frequence is related to the rate at which vortices are shed by the bluff body.

The coil 13 which acts as a primary of the system is wound on ferrite core (not shown) which is aligned with the ferrite core within the bluff body. The coil 14 is not mounted on a ferrite core and comprises just a few turns but is mounted diametrically opposite the coil 13. Thus coils 13, 10 and 14 effectively form primary, secondary and tertiary coils of the system. This arrangement minimises direct pick-up of signals originating from coil 13 by coil 14 and ensures that the coil 10 is sufficiently inductively coupled to both of the coils 13 and 14 without significant coupling between coils 13 and 14 directly.

It will be appreciated that variations in the resistance of the thermistor could be detected in alternative ways, for example by monitoring the coupling between the coils 13 and 10 directly.

The pipe 2 may be of stainless steel which is a diamagnetic material. The coupling attenuation is a function of the frequency of the AC signal applied to terminals 15. A frequency of the order of 2kHz has been found to be suitable but other frequencies may be used bearing in mind the following factors:-

1. The carrier frequency must be high enough to cover the band width of the information to be derived from the transducer and the signal must be sufficiently large in relation to the noise level;

2. If too low a frequency is used undesirably large capacitors are required to tune the coils;

3. If too high a frequency is used excessive power losses will occur in the stainless steel.

With the above factors in mind a frequency of 10kHz has been used with the illustrated circuitry to good effect.

Current in the primary coil 13 may be increased by series tuning the coil to the driving frequency using a capacitor 17. By parallel tuning the secondary coil 10 an improved frequency selectivity may be obtained together with a maximum power transfer to the thermistor 8.

In one example embodying the circuit as illustrated in Fig. 3, a signal generator and a power amplifier were connected to the coil 13 which was series tuned to the signal generator frequency of 10kHz. The coil 13 was constructed of 160 turns of 0.5mm diameter insulated copper wire wound around a 2mm diameter former mounted on the central piece of an E-shaped power ferrite core having a high saturation flux density. The inductance and resistance of the primary coil were 2mH and 1.3ohms respectively. The capacitor 17 had a value of 150nF.

A secondary coil 10 was constructed of 600 turns of 1.25mm diameter insulated copper wire wound uniformly along the length of a cylindrical ferrite core 112mm in length and 6mm in diameter. The coil 10 was parallel tuned to 10kHz by a 1.5nF capacitor (capacitor 9) across which thermistor 8 having a cold resistance of 60 kilo ohms and a power rating of 30mW. The inductance and resistance of the secondary coil 10 were 17mH and 9.4 ohms respectively. The dynamic resistance of the parallel resonant circuit was estimated to have a value of 120 kilo ohms.

The tertiary coil 14 comprised 60 turns of 0.25mm diameter insulated copper wire wound on a 25mm diameter former. The inductance and resistance of the coil were 0.25mH and 0.7 ohms respectively. A receiver circuit connected to the terminals 16 comprised a pre-amplifier, an analogue multiplier, a sixth-order active low-pass filter, a comparator and a frequency counter.

The above assembly was used with a stainless steel pipe 2 having an inside diameter of 100mm. The frontal width of the bluff body was 25mm and the thickness of the pipe 2 was 3mm. The thermistor 8 was positioned in a conventional manner relative to flow passageways 6 and 7.

**Claims**

1. A vortex shedding flowmeter for measuring the rate of flow of a fluid, comprising a bluff body which in use is mounted in the flow to be measured, an electrical component positioned so as to be exposed to vortices shed by the bluff body, the electrical component having electrical characteristics which vary in response to the vortices, an electrical circuit connected to the electrical component, an energizing circuit physically isolated from the flow and the electrical circuit, the energizing circuit being electro-magnetically coupled to the electrical component so as to cause an energizing current to flow therein which is modulated by variations in the said electrical characteristics, and means physically isolated from the flow for detecting the modulation of the said current to obtain a measurement of the flow rate.

2. A vortex shedding flowmeter according to claim 1, wherein the electrical component is a thermistor.

A vortex shedding flowmeter according to claim 2, wherein the thermistor is energised by an AC carrier signal which causes it to heat up, its resistance fluctuating in response to cyclic local fluid flows generated by vortices shed behind the bluff body.

4. A vortex shedding flowmeter according to claim 3, wherein a tertiary coil is mounted outside a conduit through which the fluid is flowing to provide a modulating voltage and means are provided for deriving a signal representing the variation in amplitude of the modulation voltage.

5. A vortex shedding flowmeter according to claim 1, wherein the electrical component is mounted in a bore extending through the bluff body.

6. A vortex shedding flowmeter according to claim 5, wherein the said bore extends parallel to a substantially planar upstream surface of the bluff body which surface is arranged substantially perpendicular to the direction of flow, and a passageway connects the said bore to the said surface of the bluff body.

FIG. 1

FIG. 2

FIG. 3

| | DOCUMENTS CONSIDERED TO BE RELEVANT | | EP 87304892.0 | |
|---|---|---|---|---|
| Category | Citation of document with indication. where appropriate, of relevant passages | Relevant to claim | CLASSIFICATION OF THE APPLICATION (Int. Cl.4) | |
| A | US - A - 4 182 165 (KITA)<br>  * Fig. 3,4; column 3, lines 1-18; column 4, lines 9-33 *<br>-- | 1,5,6 | G 01 F 1/32 | |
| A | US - A - 4 334 426 (KITA et al.)<br>  * Fig. 2; column 1, lines 44-66 *<br>-- | 1,5,6 | | |
| A | EP - A1 - 0 088 827 (MITSUBISHI)<br>  * Page 1, lines 9-19 *<br>---- | 2 | | |
| | | | TECHNICAL FIELDS SEARCHED (Int. Cl.4) | |
| | | | G 01 F 1/00<br>G 01 P 5/00 | |

The present search report has been drawn up for all claims

| Place of search | Date of completion of the search | Examiner |
|---|---|---|
| VIENNA | 18-08-1987 | BURGHARDT |